# EUROPEAN PATENT APPLICATION

(11) **EP 0 936 377 A2**
(43) Date of publication of application: **18.08.1999**
(21) Application number: 99300774.9
(22) Date of filing: 02.02.1999
(51) Int. Cl.: F16F 7/12

(54) **Sacrificial energy absorbing structure**

(30) Priority: 06.02.1998 GB 9802431
(71) Applicant: Cellbond Composites Limited, Huntingdon, Cambridgeshire PE18 6EF (GB)
(72) Inventor: Ashmead, Michael, Cellbond Compositiones Ltd., Huntingdon, Cambridgeshire PE18 6EF (GB)
(74) Representative: Maguire, Peter Albert

(57) **Abstract**

A method of making a sacrificial energy absorbing structure, e.g. crash padding, comprising the steps of providing a deformable cellular matrix of the kind comprising a plurality of open-ended tubular cells, coating the walls of the tubular cells with a flexible material and allowing the coating to cure.

## Description

### TECHNICAL FIELD

The invention relates to sacrificial energy absorbing structures, e.g. crash padding, for use, for example, in vehicles for personal protection and to a method of making such structures. By sacrificial energy absorbing structures is meant structures that are permanently deformed in absorbing impact energy, e.g., crash padding.

### BACKGROUND ART

It is known to provide panels consisting of or comprising a cellular matrix, e.g. a honeycomb-like cell structure. It is also known to arrange the cells of such matrices to have axes extending generally perpendicular to the plane of the panel or other article, with the cells being open-ended. Often such cellular matrices are used as a core in a panel and the open ends of the cells are closed by structural skins, e.g. of sheet material, applied to the opposite sides of the core.

It is further known to employ cellular structures, e.g. honeycomb structures made from aluminium foil or sheet for energy absorption, e.g. impact energy absorption. Such structures are efficient energy absorbers but have disadvantages when used in vehicles including high noise transmission characteristics, a propensity to rattle and difficulties in handling. The sharp edges of such honeycomb panels may cause personal injury when making, transporting and installing such structures.

It is an object of the invention to reduce the noise transmission properties but to retain the structural properties of an open cellular structure, e.g. for use as sacrificial crash padding.

### DISCLOSURE OF INVENTION

From one aspect the invention is a method of making sacrificial energy absorbing structure, e.g. crash padding, comprising the steps of providing a deformable cellular matrix of the kind comprising a plurality of open-ended tubular cells, coating the walls of the tubular cells with a flexible material which adheres to the walls and allowing the flexible material to cure on the walls to form a sound deadening coating thereon.

The cellular matrix may be of a honeycomb structure. The cellular matrix may be of a lightweight metal such as aluminium or an aluminium alloy and the cell walls may be made of foil or thin sheet. The cells may be arranged with their central axes extending generally perpendicular to the plane of the sacrificial energy absorbing structure whereby energy absorption is achievable by axial deformation of the cells.

The flexible coating is preferably resiliently deformable, e.g. rubber-like. The coating may be a plastics material, e.g. polyester. The coating may be foam-like. The coating may form a skin on the walls of the cells which is lightly adherent to the walls such that the skin separates from the cellular matrix when the structure is deformed. The coating is preferably such that it does not contribute significantly to the rigidity of the structure.

The coating may form a soft cover over the outer edges of the tubular cells thus assisting in preventing personal injury when making, installing and transporting such structures. Mounting pads may also be attached to or formed integrally with the outer surface of the coated structure to assist in installation of the structures.

The coating material is applied after the cellular structure has been made and profiled. The coating material may be electrostatically applied to the walls of the cells, and the coating material may be sprayed onto the cell walls in powder form. This method may provide for a more even layer of coating.

Alternatively the cellular matrix may be dipped into a bath of liquid coating material to coat the inner walls of the matrix or the liquid coating material may be sprayed into the cells. The thickness of the coating layer may be varied as desired.

From another aspect the invention is a coated cellular article made by the method described above. In particular, the article is a sacrificial energy absorbing structure comprising a honeycomb core of metal foil wherein the cell walls of the honeycomb core are coated with a layer of flexible material.

### BRIEF DESCRIPTION OF DRAWINGS

The invention is diagrammatically illustrated, by way of example, in the accompanying drawings, in which:-
Figure 1 is a flow chart showing the steps of a method according to the invention;
Figure 2 is a perspective view of a coated cellular structure according to the invention, and
Figure 3 is a cross section of the coated cellular structure of Figure 2.

### BEST MODE FOR CARRYING OUT THE INVENTION

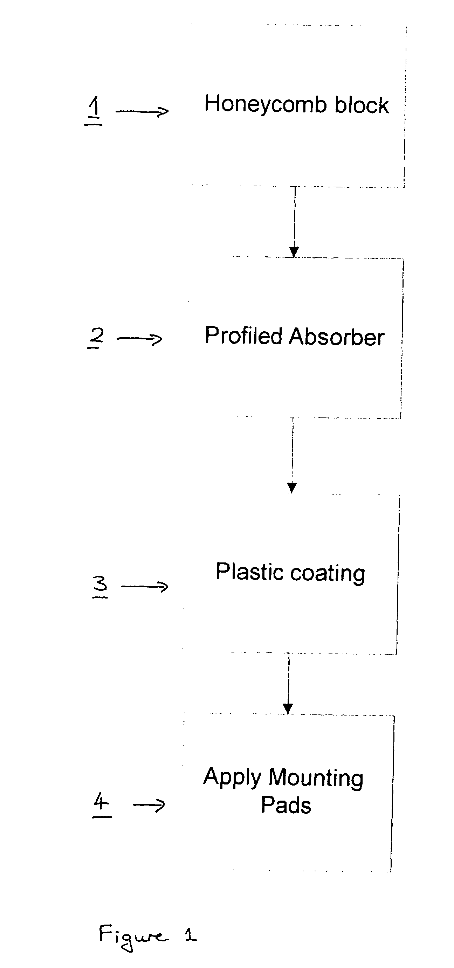

Figure 1 shows the steps of making a sacrificial energy absorbing structure, e.g. crash padding, in accordance with the invention. The first step (1) is to provide a deformable cellular matrix of the kind comprising a plurality of open-ended tubular cells, e.g. a cellular matrix comprising a honeycomb structure of aluminium foil. The next step (2) is to profile the honeycomb structure to the required shape in known manner. In practice this profiling is usually done before a block of foil has been expanded to form a honeycomb structure.

Once the honeycomb structure is profiled, the next step (3) is to coat the walls of the tubular cells with a flexible material, e.g. a plastics or elastomeric material. One method of coating the walls of the cells is to spray charged polyester particles on to the electrostatically charged cell walls. When the desired coating has been applied, the structure is placed in an oven to allow the coating to cure. The polyester material foams slightly as cured. Thus the coating forms a skin on the walls of the cells which skin is only lightly adherent such that it separates from the cellular matrix when the structure is deformed or crushed. Alternatively the matrix may be dipped into a bath of liquid coating to coat the walls of the matrix.

The final step (4) is to apply mounting pads to the coated structure to facilitate installation of the structure e.g. in the passenger compartment of a vehicle.

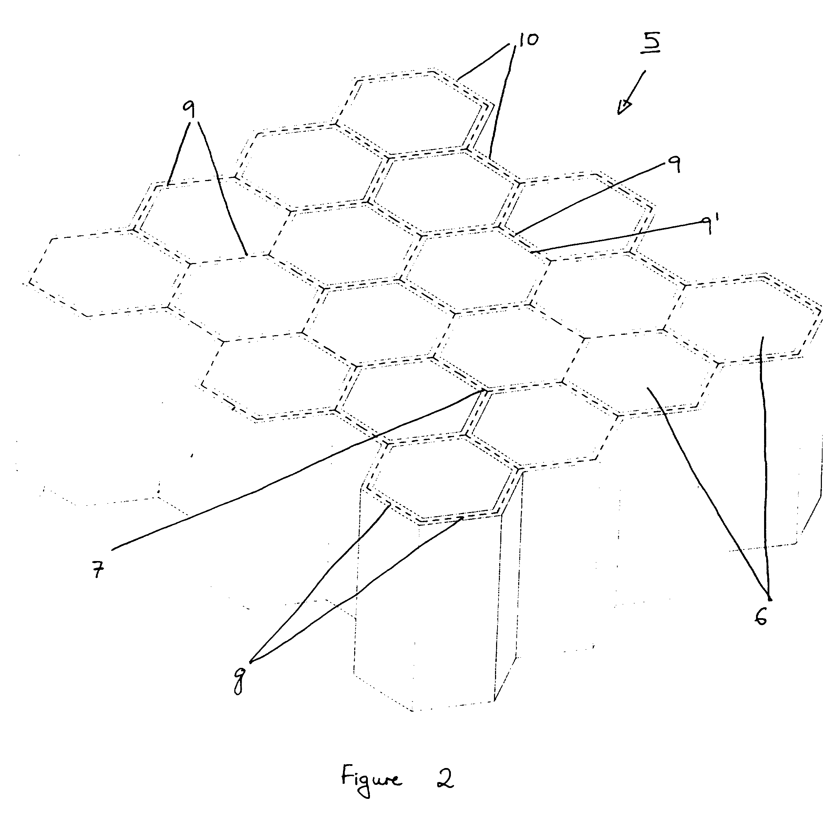

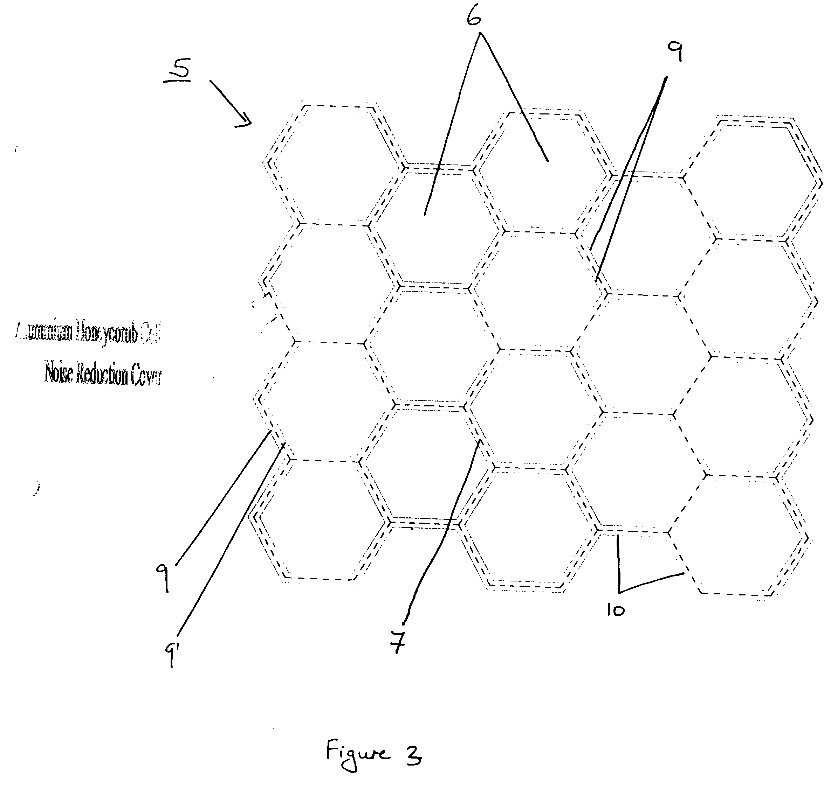

Figures 2 and 3 illustrate a sacrificial energy absorbing structure comprising a coated cellular article (5) made by the method described above. Figure 2 is a perspective view of a coated cellular article (5) with a cellular matrix of a honeycomb-like cell structure. The cells (6) of the matrix are tubular and have axes extending generally perpendicular to the plane of the article. The cells (6) are open-ended and are mutually parallel. The walls (7) of the cells (6) are made from an aluminium foil. Both the inner and outer faces of the cell walls (7) of the structure (5) are coated with a layer of flexible material (9).

The coating (9) on both inner and outer faces of the cell walls (7) assists in the prevention of noise transmission and is such as not to contribute significantly to the rigidity of the structure. The coating (10) on the outer cell walls (8) forms a soft cover over the outer edges of the honeycomb cells (6) thus assisting in preventing personal injury from the sharp edges of the cells when making, installing and transporting such structures.

Figure 3 is a cross-section of the coated cellular article (5). The cross-section of each cell (6) is hexagonal. Both the inner and outer faces of each cell wall (7) of the structure (5) are coated with a layer of flexible material (9). Thus each wall (7) of each cell (6) is sandwiched between two layers of coating (9,9'). As shown the two layers of coating (9,9') are of equal thickness but it will be appreciated that the thickness of layer of coating may be varied as desired.

### INDUSTRIAL APPLICABILITY

The invention thus provides a method of making a coated cellular structure, e.g. for use as sacrificial energy absorbing structures particularly for the passenger compartments of vehicles, e.g. motor vehicles.

Thus the structures may be used in head linings in automobiles and as linings and even seats in vehicles such as aircraft. Additionally the structures may form crash padding in crash helmets and body armour.

## Claims

1. A method of making a sacrificial energy absorbing structure, comprising the steps of providing a deformable cellular matrix comprising a plurality of open-ended tubular cells, coating the walls of the tubular cells with a flexible material which adheres to the walls and allowing the flexible material to cure on the walls to form a sound deadening coating thereon leaving the centre of the cells free of the flexible material.

2. A method according to claim 1, wherein the cellular matrix is of a honeycomb structure.

3. A method according to claim 1 or claim 2, wherein the cellular matrix is of a lightweight metal.

4. A method according to any one of claims 1 to 3, comprising arranging the cells with their central axes extending generally perpendicular to the plane of the sacrificial energy absorbing structure whereby energy absorption is achievable by axial deformation of the cells.

5. A method according to any preceding claim, wherein the flexible coating is resiliently deformable.

6. A method according to any preceding claim, wherein the flexible coating is polyester.

7. A method according to any preceding claim, wherein the coating is foam-like.

8. A method according to any preceding claim, wherein the coating forms a skin on the walls of the cells which is lightly adherent to the walls such that the skin separates from the cellular matrix when the structure is deformed.

9. A method according to any preceding claim, wherein the coating is such that it does not contribute significantly to the rigidity of the structure.

10. A method according to any preceding claim, wherein the coating forms a soft cover over the outer edges over the tubular cells.

11. A method according to any preceding claim, wherein mounting pads are attached to or formed integrally with the outer surface of the coated structure to assist in installation of the structures.

12. A method according to any preceding claim, wherein the coating material is electrostatically applied to the walls of the cells

13. A method according to any preceding claim, wherein the coating material is sprayed onto the cell walls in powder form.

14. A method according to any one of claims 1 to 12, wherein the liquid coating material is a liquid which is sprayed into the cells.

15. A method according to any one of claims 1 to 12, wherein the matrix is dipped into a bath of liquid coating material to coat the inner walls of the matrix.

16. A method of making sacrificial energy absorbing structure according to any of the preceding claims, wherein the thickness of layer of coating is varied as desired.

17. A sacrificial energy absorbing structure comprising a honeycomb core having cell walls made of metal foil defining an opening wherein the cell walls of the honeycomb core are coated with a layer of flexible material.
